# EUROPÄISCHE PATENTSCHRIFT

(11) **EP 1 870 282 B1**
(45) Veröffentlichungstag und Bekanntmachung des Hinweises auf die Patenterteilung: **15.09.2010**
(21) Anmeldenummer: 07012257.7
(22) Anmeldetag: 22.06.2007
(51) Int. Cl.: B60P 7/13

(54) **Verriegelung für Behälter und Aufsetzrahmen auf Tragwagen**
Bolting mechanism for containers and attachment frame for transport carts
Verrouillage pour récipient et réhausse sur wagon porteur

(30) Priorität: 23.06.2006 DE 102006028793
(43) Veröffentlichungstag der Anmeldung: 26.12.2007
(73) Patentinhaber: Waggonbau Graaff GmbH, 31008 Elze (DE)
(72) Erfinder: Rabing, Jörg, 31020 Salzhemmendorf (DE)
(74) Vertreter: Gosch, Wolf-Dietrich

(56) Entgegenhaltungen:
- DE-A1- 3 640 323
- GB-A- 1 217 486
- US-A- 3 734 442

## Beschreibung

Die Erfindung betrifft eine Verriegelung für Behälter aufnehmende Aufsetzrahmen auf Tragwagen und anderen für die Aufnahme von Behältern geeignete Einrichtungen, wobei die Tragwagen und die Aufsetzrahmen jeweils entsprechend den Behälter-ISO-Normen mit Aufsetzzapfen versehen sind, die in ihnen zugekehrte Eckbeschläge der Aufsetzrahmen und Behälter hineinragen und die in Querrichtungen von jeweils einer Bohrung durchdrungen sind, wobei in der Bohrung (7) jedes Aufsetzzapfens (5) des Tragwagens (4) ein Bolzen (8) drehbar gelagert ist, der an seinem Schaft (9) mit einem Exzenter (10) versehen ist, der eine Ausnehmung (11) des ihm zugekehrten Eckbeschlages (6) des Aufsetzrahmens (3) durchdringt und einem mit dem Bolzen (8) verbundenen Betätigungshebel (12) benachbart ist, der in geschlossener Stellung den Eckbeschlag (6) auf dem Tragwagen (4) klemmend beaufschlagt und der in geöffneter Stellung des Exzenters (10) lösbar in der Bohrung (7) gelagert ist.

Eine derartige Verriegelung ist aus der US-A 3 734 442 (Lunde T.) bekannt.

Um mittels eines horizontal arbeitenden Behälterumschlaggerätes (z.B. Mobiler-Technologie) Behälter von einem LKW auf ein Schienenfahrzeug (z.B. Containertragwagen) umzusetzen oder umgekehrt, ist oftmals ein Aufsetzrahmen erforderlich, der einen Freiraum zwischen dem Behälter und dem Schienenfahrzeug bildet, damit der Transportschlitten des Umschlaggerätes unter den Behälter fahren kann.

Um ein einfaches und klemmfreies Umschlagen des Behälters zu ermöglichen, ist sowohl ein Spiel in Längs- wie auch in Querrichtung des Schienenfahrzeuges erforderlich. Bei einem herkömmlichen Behältertragwagen ist zwischen den genormten Behältereckbeschlägen (ISO-Norm) und den genormten Aufsetzzapfen am Tragwagen sowohl in Längs- wie auch in Querrichtungen ein Spiel vorgesehen. Dies gewährleistet eine einfache Be- und Entladung ohne Verklemmen der Behälter.

Die Aufsetzzapfen und Eckbeschläge sind so ausgelegt, dass sie die dynamischen Belastungen, die beim Betrieb von Schienenfahrzeugen auftreten, sicher aufnehmen können.

Dieses Spiel wird beim Einsatz eines Aufsetzrahmens aufgrund zweier anstatt einer Paarung von Eckbeschlägen und Aufsetzzapfen vergrößert. Diese Vergrößerung des Gesamtspiels hat zur Folge, dass die dynamischen Belastungen derart ansteigen, dass die Aufsetzzapfen und Eckbeschläge überlastet werden.

Darüber hinaus besteht das Risiko, dass beim Endladen, d.h. dem Abheben des Behälters der Aufsetzrahmen mit abgehoben wird.

Aufgabe der vorliegenden Erfindung ist es daher, eine Verriegelung der eingangs genannten Art zu schaffen, mit deren Hilfe das Spiel zwischen Tragwagen und Aufsetzrahmen stark verringert wird und durch die verhindert wird, dass der Aufsetzrahmen vom Tragwagen beim Entladen abgehoben wird.

Diese Aufgabe wird erfindungsgemäß dadurch gelöst, dass der Betätigungshebel ein Betätigungsende aufweist, das von einer langlochförmigen Ausnehmung durchdrungen ist, in der ein Sicherheitsbolzen in einer Sicherungskulisse festgelegt ist, die an dem Tragwagen benachbart zum Aufsetzzapfen angeordnet ist.

Nach Einsetzen des Bolzens in den Eckbeschlag und die entsprechende Bohrung des Aufsetzzapfens kann der Betätigungshebel verschwenkt werden und der Exzenter am Bolzen dabei den Eckbeschlag fest auf den Tragwagen drücken. Nach Erreichen einer Vorspannung wird der Hebel an einer Sicherungskulisse befestigt und auf diese Weise ist sowohl das Längs- als auch das Querspiel zwischen Aufsetzzapfen und Eckbeschlag nahezu vollständig beseitigt. Ferner kann der Aufsetzrahmen nicht vom Tragwagen abgehoben werden. Darüber hinaus hat diese Verriegelung den Vorteil, dass sie leicht einsetzbar und leicht zu demontieren ist und durch diese Verriegelung keine spürbare Behinderung des Ladeverkehrs herbeigeführt wird.

Weitere Einzelheiten der Erfindung ergeben sich aus der nachfolgenden ausführlichen Beschreibung und den beigefügten Zeichnungen, in denen eine bevorzugte Ausführungsform der Erfindung beispielsweise veranschaulicht ist.

In den Zeichnungen zeigen:

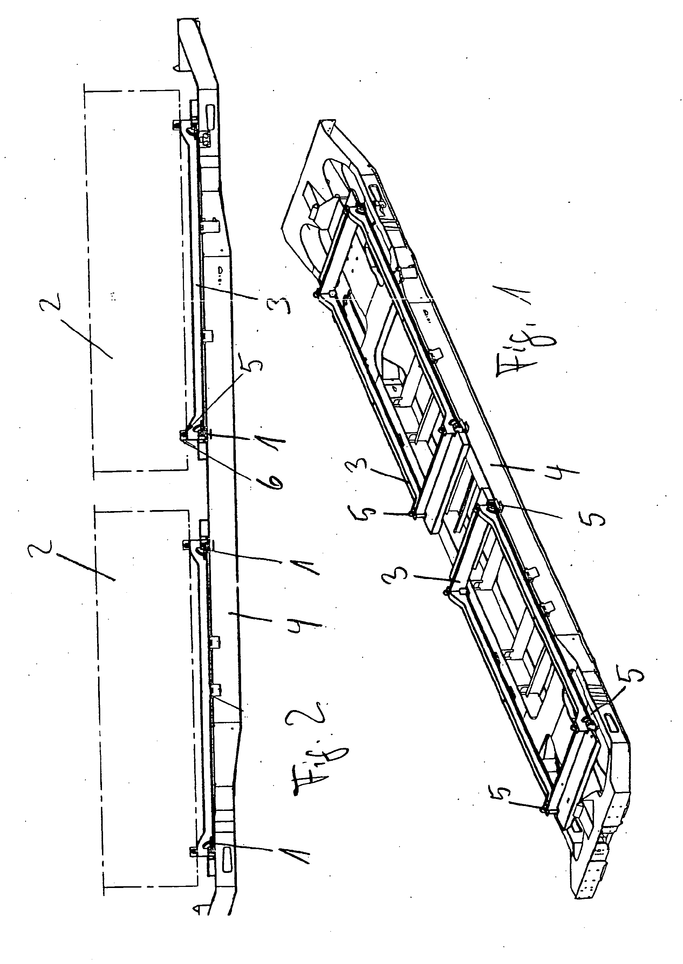

- Fig. 1:: Eine perspektivische Darstellung eines Untergestells eines Behälter-Tragwagen mit zwei aufgesetzten Aufsetzrahmen;
- Fig. 2:: ein Untergestell gem. Fig. 1 in Seitenansicht jeweils mit angedeuteten aufgesetzten Behältern;

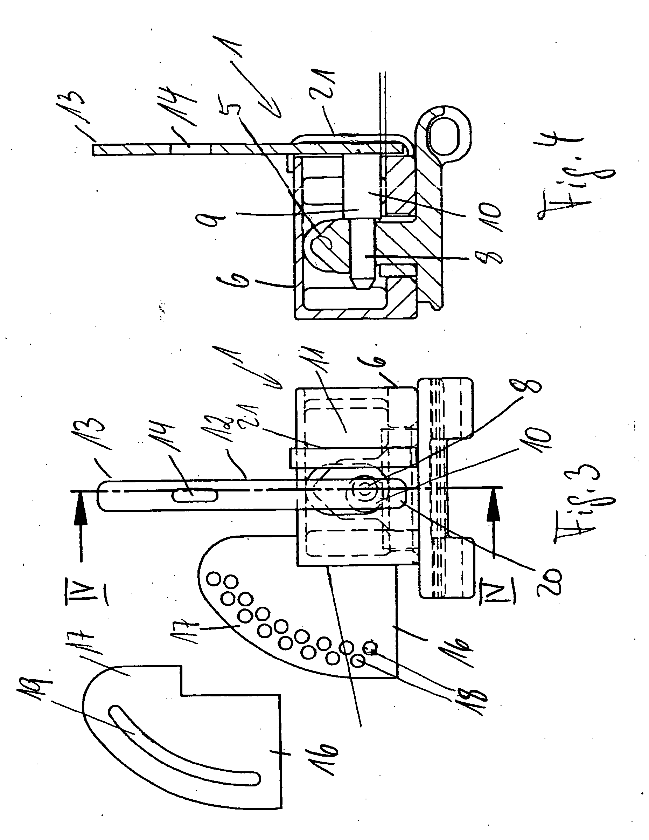

- Fig. 3:: eine Vorderansicht einer Verriegelung;
- Fig. 4:: ein Schnitt entlang der Linie IV/IV in Figur 3;

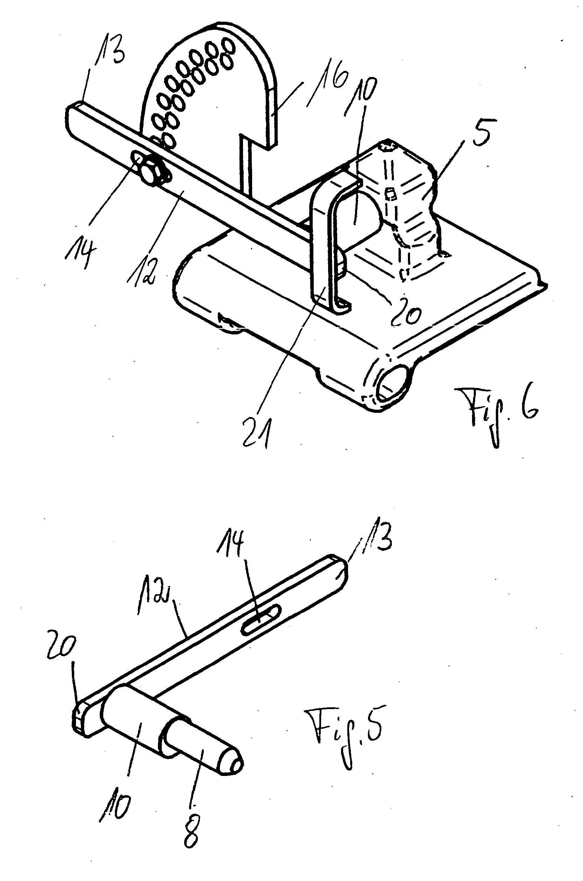

- Fig. 5:: einen Bolzen mit Exzenter und Betätigungshebel;
- Fig. 6:: eine Verriegelung mit einem in den Aufsetzzapfen des Tragwagens eingesetzten Bolzen mit geschlossenem Exzenter und eingesetztem Sicherungsbolzen und

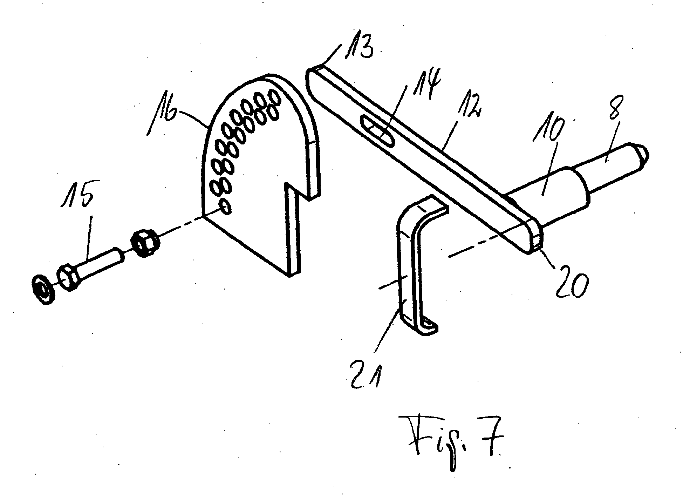

- Fig. 7:: eine Verriegelung in Explosionsdarstellung.

Eine erfindungsgemäße Verriegelung 1 für Behälter 2 aufnehmende Aufsetzrahmen 3 auf Tragwagen 4, die jeweils mit Aufsetzzapfen 5 versehen sind, die in ihnen zugekehrte Eckbeschläge 6 hineinragen besteht im Wesentlichen aus einem in einer Bohrung 7 des Aufsetzzapfens 5 drehbar gelagerten Bolzen 8, der an seinem Schaft 9 mit einem Exzenter 10 versehen ist, der durch eine Ausnehmung 11 des Eckbeschlages 6 hindurch ragt und einem mit dem Bolzen 8 verbundenen Betätigungshebel 12 benachbart ist. Der Exzenter 10 beaufschlagt in seiner geschlossenen Stellung den Eckbeschlag 6 im Bereich der Ausnehmung 11 klemmend auf dem Tragwagen 4. In geöffneter Stellung des Exzenters 10 ist der Bolzen 8 lösbar in der Bohrung 7 gelagert.

Der Betätigungshebel 12 ist im Bereich seines Betätigungsendes 13 mit einer langlochförmigen Ausnehmung 14 versehen, in der ein Sicherungsbolzen 15 angeordnet ist. Der Sicherungsbolzen 15 ist in geschlossener Stellung des Exzenters 10 in einer Sicherungskulisse 16 festgelegt, die an dem Tragwagen 4 benachbart jeweils zu einem seiner Aufsetzzapfen 5 angeordnet. Die Sicherungskulisse 16 kann aus einer Stahlplatte 17 bestehen, die mit zwei Reihen gegeneinander versetzt angeordneter, parallel verlaufender Bohrungen 18 zur Aufnahme des Sicherungsbolzens 15 versehen ist. Die Bohrungen 18 sind viertelkreisförmig entsprechend einer Schwenkbewegung des Betätigungshebels der Ausnehmung 14 zugekehrt. Die Sicherungskulisse 16 kann auch an Stelle der Bohrungen 18 mit einem viertelkreisförmigen Führungsschlitz 19 im Sinne einer kraftschlüssigen Verbindung mit dem Sicherungsbolzen 15 ausgebildet sein.

Der Betätigungshebel 12 hat an seinem dem Betätigungsende 13 abgewandten anderen Ende 20 eine Verlängerung 21, die bei geschlossenem Exzenter 10 hinter einen Sicherungsbügel 21 im Sinne eines Interreibers hinterragt.

Die erfindungsgemäße Verriegelung 1 wird wie folgt eingesetzt:

Nachdem auf einem Tragwagen 4 ein oder zwei Aufsetzrahmen 3 aufgesetzt worden sind, ragen die Aufsetzzapfen 5 des Tragwagens 4 in Eckbeschläge 6 des Aufsetzrahmens 3 hinein. Jeweils in die Ausnehmung 11 der Eckbeschläge 6 des Aufsetzrahmens 3 wird der Bolzen 8 in die Bohrung 7 des Aufsetzzapfens 5 eingeführt und der Betätigungshebel 12 aus seiner senkrechten Stellung in eine annähernd waagerechte Stellung verschwenkt, so dass der Exzenter 10 des Bolzens 8 den Eckbeschlag 6 im Bereich seiner Ausnehmung 12 nach unten auf den Tragwagen 4 drückt und auf diese Weise sowohl das seitliche Spiel als auch das Spiel in Längsrichtung im Bereich der Verbindung Aufsetzzapfen 5 und Eckbeschlag 6 nahezu vollständig aufhebt. Nachdem der Betätigungshebel 12 in seine Endstellung verschwenkt ist, wird er mit Hilfe des Sicherungsbolzens 15 in der Sicherungskulisse 16 gegen ein Rückschwenken gesichert. Nachdem alle vier Eckbeschläge 6 des Aufsetzrahmens 3 mit Hilfe der Verriegelung 1 gesichert sind, können auf die Aufsetzrahmen 4 üblicherweise aufgesetzt werden. Wenn die Behälter 2 vom Aufsetzrahmen 3 abgehoben werden, ist der Aufsetzrahmen 3 durch die Verriegelung 1 gegen Abheben gesichert.

Für den Fall, dass die Aufsatzrahmen 3 nicht benötigt werden, kann der Sicherungsbolzen 1 aus der Sicherungskulisse 16 gelöst, der Betätigungshebel 12 in senkrechter Richtung geschwenkt werden, wodurch der Exzenter 10 geöffnet und der Bolzen 8 aus der Bohrung 7 des Eckbeschlages 6 herausgezogen werden kann, so dass der Aufsetzrahmen 3 vom Tragwagen 4 abgehoben werden kann.

Zur Sicherung der Verriegelung 1 gegen Verlust wird der Bolzen 8 erneut in die Bohrung 7 eingeschoben, der Betätigungshebel 12 in waagerechte Richtung verschwenkt und mit Hilfe des Sicherungsbolzens 15 in der Sicherungskulisse 16 sowie durch das andere Ende 20 des Betätigungshebels 12 hinter dem Sicherungsbügel 21 gegen Verlust gesichert.

## Patentansprüche

1. Verriegelung für Behälter aufnehmende Aufsetzrahmen auf Tragwagen und anderen für die Aufnahme von Behältern geeignete Einrichtungen, wobei die Tragwagen und die Aufsetzrahmen jeweils entsprechend den Behälter-ISO-Normen mit Aufsetzzapfen versehen sind, die in ihnen zu gekehrte Eckbeschläge der Aufsetzrahmen und Behälter hineinragen und die in Querrichtungen von jeweils einer Bohrung durchdrungen sind, wobei in der Bohrung (7) je des Aufsetzzapfens (5) des Tragwagens (4) ein Bolzen (8) drehbar gelagert ist, der an seinem Schaft (9) mit einem Exzenter (10) versehen ist, der eine Ausnehmung (11) des ihm zugekehrten Eckbeschlages (6) des Aufsetzrahmens (3) durchdringt und eine mit dem Bolzen (8) verbundenen Betätigungshebel (12) benachbart ist, und daß der Exzenter in geschlossener Stellung Eckbeschlag (6) auf dem Tragwagen (4) klemmend beaufschlagt und daß der Bolzen (8) in geöffneter Stellung des Exzenters (10) lösbar in der Bohrung (7) gelagert ist, **dadurch gekennzeichnet, dass** der Betätigungshebel (12) ein Betätigungsende (13) aufweist, das von einer langlochförmigen Ausnehmung (14) durchdrungen ist, in der ein Sicherheitsbolzen (15) in geschlossener Stellung des Exzenters (10) in einer Sicherungskulisse (16) festgelegt ist, die an dem Tragwagen (4) benachbart zum Aufsetzzapfen (5) angeordnet ist.

2. Verriegelung nach Anspruch 1, **dadurch gekennzeichnet, dass** die Sicherungskulisse (16) mit einer Vielzahl von Bohrungen (18) versehen ist, die in zwei Reihen einander beabstandet und viertelkreisförmig entsprechend der Schwenkbewegung des Betätigungshebels (12) angeordnet sind.

3. Verriegelung nach Anspruch 1, **dadurch gekennzeichnet, dass** die Sicherungskulisse (16) mit einem Führungsschlitz (19) im Sinne einer kraftschlüssigen Verbindung mit dem Sicherungsbolzen (15) ausgebildet ist.

4. Verriegelung nach Anspruch 1 bis 3, **dadurch gekennzeichnet, dass** der Betätigungshebel (12) an seinem dem Betätigungsende (13) abgewandten anderen Ende (20) eine Verlängerung aufweist, die als Hinterreiber hinter einen Sicherungsbügel (21) ragt und bei geschlossenem Exzenter (10) der Betätigungshebel (12) mit dem Sicherungsbügel (21) gesichert ist.

## Claims

1. Locking mechanism for mounting frames, which receive containers, on carrier wagons and other facilities suitable for receiving containers, wherein the carrier wagons and the mounting frames are each provided with mounting pins corresponding to the ISO container standards, which pins protrude into corner fittings, facing towards them, of the mounting frames and containers and which in the transverse direction each have a bore passing through them, wherein rotatably mounted in the bore (7) of each mounting pin (5) of the carrier wagon (4) is a bolt (8) which is provided on its shaft (9) with an eccentric (10) which passes through a cut-out (11) of the corner fitting (6), facing towards it, of the mounting frame (3) and is adjacent to an actuating lever (12) connected to the bolt (8), and that the eccentric, in the closed position, acts upon the corner fitting (6) on the carrier wagon (4) in a clamping manner, and that the bolt (8), when the eccentric (10) is in the open position, is releasably mounted in the bore (7), **characterised in that** the actuating lever (12) comprises an actuating end (13) which has an elongate cut-out (14) passing through it in which a safety bolt (15) is fixed in a safety link (16) when the eccentric (10) is in the closed position, which safety link is disposed on the carrier wagon (4) adjacent to the mounting pin (5).

2. Locking mechanism as claimed in Claim 1, **characterised in that** the safety link (16) is provided with a plurality of bores (18) which are disposed in two rows at a spaced disposition with respect to each and in the shape of a quadrant corresponding to the pivoting movement of the actuating lever (12).

3. Locking mechanism as claimed in Claim 1, **characterised in that** the safety link (16) is formed with a guide slot (19) in the manner of a non-positive-locking connection with the safety bolt (15).

4. Locking mechanism as claimed in Claim 1 to 3, **characterised in that** the actuating lever (12) comprises an extension at its other end (20) remote from the actuating end (13), which extension protrudes behind a safety bracket (21) as a rear stop and when the eccentric (10) is closed the actuating lever (12) is secured to the safety bracket (21).

## Revendications

1. Verrouillage pour des réhausses accueillant des conteneurs sur des wagons porteurs et aussi pour d'autres dispositifs prévus pour accueillir des conteneurs, étant précisé que
- les wagons porteurs et les réhausses sont équipés tous deux de tenons de pose correspondant aux normes ISO des conteneurs, qui pénètrent dans les équerres situées en égard d'eux dans les wagons porteurs et les conteneurs, et qui sont traversés en direction transversale chacun par un alésage, chaque tenon de pose (5) du wagon porteur (4) contenant dans son alésage (7) une cheville (8) rotative qui présente sur sa tige (9) un excentrique (10) qui pénètre dans un évidement (11) de l'équerre (6) située en face dans la réhausse (3),
- l'excentrique est voisin d'un levier d'actionnement (12) relié à la cheville (8) et, en position de fermeture, il agit en pinçant l'équerre (6) sur le wagon porteur (4) tandis qu'en position d'ouverture, la cheville (8) est amovible dans l'alésage (7), ce verrouillage étant **caractérisé en ce que** le levier d'actionnement (12) présente une extrémité d'actionnement (13) traversée par un évidement (14) en forme de trou allongé dans lequel, quand l'excentrique (10) est en position de fermeture, une broche de sécurité (15) est fixée sur une coulisse de sécurité (16) qui est disposée sur le wagon porteur (4) près du tenon de pose (5).

2. Verrouillage selon la revendication 1, **caractérisé en ce que** la coulisse de sécurité (16) présente une pluralité de perçages (18) espacés les uns des autres selon deux files occupant un quadrant correspondant au mouvement de basculement du levier d'actionnement (12).

3. Verrouillage selon la revendication 1, **caractérisé en ce que** la coulisse de sécurité (16) présente une fente de guidage (19) pour assurer une liaison verrouillée par friction avec la broche de sécurité (15).

4. Verrouillage selon la revendication 1 ou 3, **caractérisé en ce que** le levier d'actionnement (12), à son autre extrémité (20) opposée à l'extrémité d'actionnement (13), présente un prolongement qui fait saillie en tant qu'élément de friction derrière un étrier de sécurité (21) et, quand l'excentrique (10) est en position de fermeture, le levier d'actionnement (12) est sécurisé par l'étrier (21).
